# EUROPÄISCHE PATENTSCHRIFT

(11) **EP 3 475 772 B1**
(45) Veröffentlichungstag und Bekanntmachung des Hinweises auf die Patenterteilung: **12.06.2019**
(21) Anmeldenummer: 18700755.4
(22) Anmeldetag: 17.01.2018
(51) Int. Cl.: G05B 19/04

(54) **VERFAHREN ZUM BEREITSTELLEN VON AKTUATORBASIERTEN FAHRZEUGFUNKTIONEN IN EINEM KRAFTFAHRZEUG SOWIE KRAFTFAHRZEUG-RECHENEINRICHTUNG UND KRAFTFAHRZEUG**
METHOD FOR PROVIDING ACTUATOR-BASED VEHICLE FUNCTIONS IN A MOTOR VEHICLE, AND MOTOR VEHICLE COMPUTING DEVICE AND MOTOR VEHICLE
DISPOSITIF POUR UTILISER DES FONCTIONS DE VÉHICULE BASÉES SUR DES CAPTEURS DANS UN VÉHICULE À MOTEUR ET DISPOSITIF DE CALCUL POUR VÉHICULE À MOTEUR ET VÉHICULE À MOTEUR

(30) Priorität: 17.01.2017 DE 102017200655
(43) Veröffentlichungstag der Anmeldung: 01.05.2019
(73) Patentinhaber: Audi AG, 85045 Ingolstadt (DE)
(72) Erfinder: KISTLER, Günter, 85283 Niederlauterbach (DE)
(86) Internationale Anmeldenummer: PCT/EP2018/051055
(87) Internationale Veröffentlichungsnummer: WO 2018/134218

(56) Entgegenhaltungen:
- WO-A1-2004/037599
- US-A1- 2014 067 231

## Beschreibung

Die Erfindung betrifft ein Verfahren zum Bereitstellen von Fahrzeugfunktionen in einem Kraftfahrzeug. Die Fahrzeugfunktionen sind jeweils sensorbasiert, d.h. sie werden in Abhängigkeit von Sensordaten einer Sensoreinrichtung des Kraftfahrzeugs ausgeführt. Es gibt in dem Kraftfahrzeug also eine Sensorebene und eine übergeordnete Rechenebene, auf welcher eine Recheneinrichtung mehrere Fahrzeugfunktionen ausführt. Zu der Erfindung gehört auch die Recheneinrichtung zum Ausführen der Fahrzeugfunktionen. Schließlich umfasst die Erfindung auch das Kraftfahrzeug mit einer Sensoreinrichtung und mit einer Recheneinrichtung.

Bei einem heutigen Steuergerät ist es in der Regel vorgesehen, dass es für eine bestimmte Fahrzeugfunktion konstruiert ist und hierzu auch direkt mit den Sensoren verschaltet ist, die für die Fahrzeugfunktion benötigt werden. Die Software oder Funktionskomponente, mittels welcher die Fahrzeugfunktion bereitgestellt wird, wird im Produktionsprozess des Steuergeräts in einen Datenspeicher desselben abgespeichert und ist auf die vorhandene, angeschlossene Sensorik abgestimmt. Eine Funktionserweiterung oder Funktionsänderung während der Laufzeit des Steuergeräts, also nach dem Einbau in ein Kraftfahrzeug, ist nicht vorgesehen oder erfordert einen Umbau oder Service.

Somit sind Fahrzeugfunktionen an ein jeweiliges Steuergerät gebunden und müssen an die Bauweise der Sensoren angepasst werden. Eine Veränderung einer Fahrzeugfunktion ist nur durch einen Komplettaustausch der Software des Steuergeräts ermöglicht. Ein Nachladen von einzelnen Fahrzeugfunktionen ist für ein Steuergerät nicht vorgesehen. Ein Kraftfahrzeug mit mehreren Fahrzeugfunktionen weist entsprechend auch mehrere Steuergeräte auf, sodass eine Vielzahl von Steuergeräten in dem Kraftfahrzeug vorhanden ist, von denen jedes spezialisiert ausgestaltet ist.

Aus der DE 10 2004 049 155 B3 ist ein Diagnosesystem für ein Kraftfahrzeug bekannt, bei welchem mehrere Software-Komponenten, die Daten untereinander austauschen müssen, auf einem gemeinsamen Steuergerät installiert sind. Somit werden Kommunikationswege verkürzt.

Aus der DE 10 2012 107 886 A1 ist ein Verfahren zur elektronischen Erkennung von Verkehrszeichen bekannt, bei welchem eine Objekterkennungseinheit direkt mit einer Kamera verbunden ist, um Bilddaten der Kamera empfangen zu können.

Aus der DE 10 2015 118 489 A1 ist eine Fernbedienung eines autonomen Fahrzeugs bekannt. In dem Fahrzeug kann ein Laptop oder allgemein eine Computervorrichtung an Sensoren des Kraftfahrzeugs und an Fahrzeugsysteme des Kraftfahrzeugs, wie beispielsweise ein Antriebssystem, angeschlossen werden. Die Computervorrichtung kann über eine Kommunikationsschnittstelle auch mit dem Internet verbunden werden.

In der US 2016/0311285 A1 ist ein Kraftfahrzeug beschrieben, bei dem mehrere Sensoren an eine Sensorplatine angeschlossen sind, die sämtliche Sensordaten aller Sensoren gemeinsam über eine einzige Kommunikationsleitung an einen Controller übermitteln kann. Der Controller kann dann in Abhängigkeit von den Sensordaten einen Aktuator steuern. Damit der Controller den Aktuator korrekt ansteuert, muss er diesen kennen, wozu auf der Sensorplatine aktuatorspezifische Kenndaten gespeichert sind, die bei Inbetriebnahme des Systems von der Sensorplatine in den Controller übertragen werden, damit der Controller überprüfen kann, ob er noch die korrekten Kenndaten verwendet. Der Controller steuert den Aktuator direkt über eine entsprechende Schnittstelle.

Die WO 2004/037599 A1 beschreibt, dass man in einem Kraftfahrzeug ein Steuergerät mit einem Motorblock über eine Adapter-Schnittstelle (Interface) koppeln kann, in welcher ein Signalkonverter ohne Zwischenschaltung einer Berechnung eine Wandlung von Signalen vornimmt, um die Signale zwischen einem Datenbus einerseits und Sensoren/Aktuatoren des Motorblocks andererseits zu übertragen. Da die Adapter-Schnittstelle keine eigene Berechnung vorsieht, muss konsequenter Weise in dem Steuergerät die Software angepasst werden, sobald ein neues Getriebe oder ein neuer Motortyp eingebaut wird.

Der Erfindung liegt die Aufgabe zugrunde, in einem Kraftfahrzeug Fahrzeugfunktionen flexibel bereitstellen zu können.

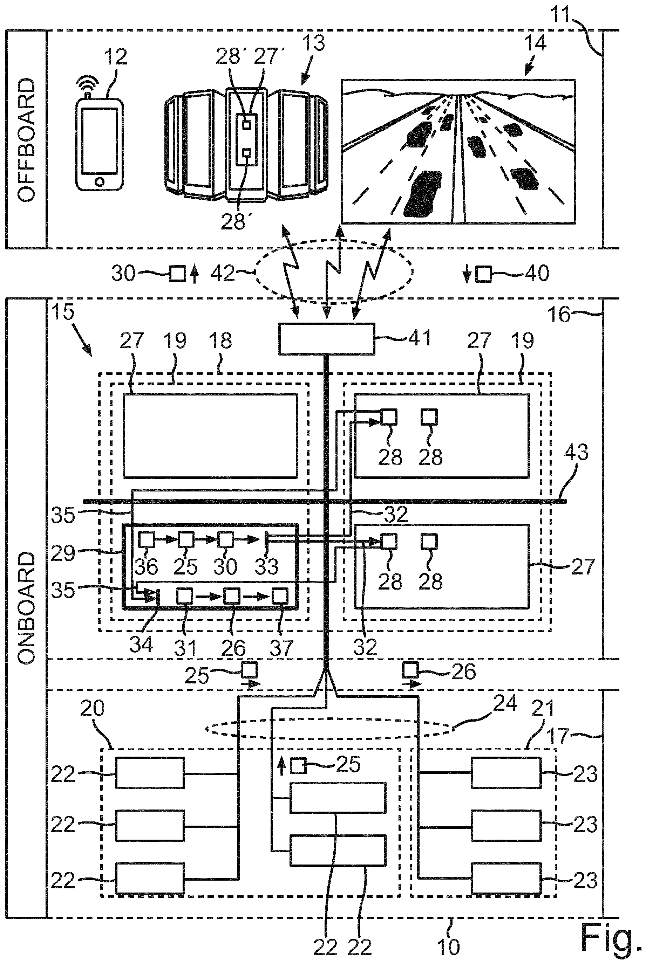

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Mittels des erfindungsgemäßen Verfahrens können Fahrzeugfunktionen in einem Kraftfahrzeug bereitgestellt werden. Ein jeweiliges Beispiel für solche Fahrzeugfunktionen sind eine Einparkassistenz, autonomes Fahren, ein Klimamanagement, eine Fahrerassistenzfunktion, ein Abstandsregelautomat, eine Überholassistenz.

Das Kraftfahrzeug kann man sich in eine Aktuatorebene und eine logische Rechenebene eingeteilt denken. Zum Realisieren der Rechenebene sieht das erfindungsgemäße Verfahren vor, dass eine Recheneinrichtung des Kraftfahrzeugs mehrere Fahrzeugfunktionen ausführt oder bereitstellt. Jede der ausgeführten Fahrzeugfunktionen erzeugt Kommandodaten für zumindest einen jeweiligen Aktuator einer Aktuatoreinrichtung des Kraftfahrzeugs, die wiederum die besagte Aktuatorebene repräsentiert oder darstellt. Als Aktuator kann beispielsweise jeweils einer der folgenden vorgesehen sein: ein Elektromotor, eine Pneumatik, eine Mechatronik, eine Pumpe, ein elektrisches Schloss, ein Verbrennungsmotor, um nur einige beispielhaft zu nennen. Die Recheneinrichtung kann zum Ausführen der Fahrzeugfunktionen einen oder mehrere Mikroprozessoren und/oder Mikrocontroller aufweisen. Die Recheneinrichtung kann durch ein einzelnes Steuergerät oder durch einen Verbund aus mehreren Steuergeräten realisiert sein. Die Fahrzeugfunktionen können jeweils beispielsweise durch ein Programmmodul oder Programmcode realisiert sein.

Um nun die beiden Ebenen (Rechenebene und Aktuatorebene) logisch voneinander zu trennen oder unabhängig zu machen, ist erfindungsgemäß folgendes vorgesehen. In dem Kraftfahrzeug sind die Fahrzeugfunktionen mit der Aktuatoreinrichtung über eine Integrationskomponente gekoppelt. Diese Integrationskomponente kann ebenfalls Teil der Recheneinrichtung sein, also beispielsweise ebenfalls ein Programmmodul oder Programmcode. Die Integrationskomponente vermittelt zwischen den Fahrzeugfunktionen einerseits und zumindest einem Aktuator der Aktuatoreinrichtung andererseits. Sie ist also eine Vermittlungskomponente und integriert den zumindest einen Aktuator in die Rechenebene. Die Fahrzeugfunktionen geben hierzu jeweils ihre Kommandodaten mittels einer jeweiligen aktuatorunabhängigen Aufrufroutine an die Integrationskomponente aus. Eine Aufrufroutine kann z.B. mittels einer API (Application Programming Interface) realisiert sein. Die Integrationskomponente wandelt die Kommandodaten in jeweilige aktuatorspezifische Steuerdaten um und überträgt die Steuerdaten mittels einer aktuatorspezifischen Ansteuerroutine an den jeweiligen Aktuator. Somit ist also die Aktuatoransteuerung getrennt von den Fahrzeugfunktionen realisiert. Jede Fahrzeugfunktion muss lediglich an einer Aufrufschnittstelle jeweils die Aufrufroutine durchführen oder aufrufen oder auslösen, um hierdurch ihre Kommandodaten an die Integrationskomponente zu übergeben. Dieser setzt die Kommandodaten dann jeweils in Steuerdaten um. Die Steuerdaten kann die Integrationskomponente dann zum Beispiel über ein Datennetzwerk an den jeweils anzusteuern Aktuator übertragen oder aussenden.

Jede der Fahrzeugfunktionen muss sich somit nicht mit dem Erzeugen von aktuatorspezifischen Steuerdaten der Aktuatoreinrichtung auskennen oder befassen. Stattdessen ruft jede der Fahrzeugfunktionen eine Aufrufroutine der Integratioskomponente auf und übergibt dieser Kommandodaten, die angeben, was der jeweilige Aktuator tun oder ausführen soll. Damit ist die Fahrzeugfunktion hardwareunabhängig. Somit ergibt sich für die Fahrzeugfunktionen ein einheitliches Protokoll für die Aufrufroutine. Das Austauschen eines Aktuators erfordert es somit nicht, dass auch die Fahrzeugfunktion angepasst wird. Die aktuatorspezifischen Steuerdaten können dagegen Steuerbefehle enthalten, die nur von dem angesteuerten Akuator interpretiert werden können. Z.B. kann die Aufrufroutine ganz allgemein das Einstellen eines Lenkwinkels durch die Angabe von "Grad" vorsehen (z.B. "5° links"), während dann der zuständige Aktuator z.B. eine Angabe in einem herstellerspezifischen Format (z.B. "12 Ticks links") als Steuerdaten erwartet. Die Umrechnung erfolgt dann in der Integrationskomponente. Zudem steht jeder Aktuator über die Integrationskomponente mehreren Fahrzeugfunktionen bereit, sodass nicht jede Fahrzeugfunktion selbst zusammen mit einem eigenen Aktuator bereitgestellt werden muss.

Durch die Erfindung ergibt sich der Vorteil, dass eine Fahrzeugfunktion einerseits und ein Aktuator andererseits ausgetauscht werden können, ohne dass der jeweils andere Teil eine Anpassung erfordert. Die Integrationskomponente vermittelt zwischen Fahrzeugfunktionen einerseits und dem zumindest einen Aktuator der Aktuatoreinrichtung andererseits. Zudem können die Fahrzeugfunktionen unabhängig von den im kraftfahrzeuggenutzten Aktuatoren entwickelt werden und in Kraftfahrzeugen, die unterschiedliche Aktuatoren aufweisen, verwendet werden.

Zu der Erfindung gehören auch optionale Weiterbildungen, durch die sich zusätzliche Vorteile ergeben.

Bevorzugt nimmt die Integrationskomponente die Kommandodaten an einer für alle Fahrzeugfunktionen zugänglichen Aufrufschnittstelle entgegen. Hierdurch kann eine Fahrzeugfunktion nachgerüstet werden und diese dann ebenfalls mittels einer Aufrufroutine Kommandodaten ausgeben, ohne in besonderer Weise mit der Aktuatoreinrichtung verknüpft werden zu müssen. Somit kann eine neue Fahrzeugfunktion im Kraftfahrzeug nachgerüstet werden, ohne dass hierzu ein zusätzlicher Aktuator bereitgestellt werden muss. Die Fahrzeugfunktion kann die gemeinsame Aufrufschnittstelle nutzen, um einen vorhandenen Aktuator anzusteuern.

Das Umwandeln von Kommandodaten in jeweilige Steuerdaten kann zum Beispiel vorsehen, dass eine Einheitenkonvertierung durchgeführt wird und/oder eine Skalierung. Dies erlaubt es, die Fahrzeugfunktionen unabhängig von aktuatorspezifischen Definitionen der Steuerdaten zu implementieren oder zu entwickeln. Entsprechend ist bevorzugt auch vorgesehen, dass jede Aufrufroutine unabhängig von einem Hersteller und/oder Baumodell jedes Aktuators ist. Somit kann also die Fahrzeugfunktion unabhängig von Hardwarebedingungen in Form des zumindest einen Aktuators und/oder unabhängig von Zuliefererbedingungen der Lieferer des zumindest einen Aktuators entwickelt werden. Die Anpassung einer Fahrzeugfunktion an einen im Kraftfahrzeug vorhandenen Aktuator erfolgt durch die Integrationskomponente. Somit ist eine hardwareunabhängige Entwicklung oder Herstellung einer Fahrzeugfunktion möglich.

Die Fahrzeugfunktionen einerseits und jeder Aktuator andererseits sind bevorzugt derart ausgestaltet, dass sie unabhängig voneinander austauschbar sind. Das Ersetzen oder austauschen einer Fahrzeugfunktion oder eines Aktuators wird auf der jeweils anderen Seite durch die Integrationskomponente kompensiert oder kaschiert.

Die Integrationskomponente kann wie eine Fahrzeugfunktion als Teil der Recheneinrichtung ausgestaltet sein, zum Beispiel als weiteres Programmmodul. Insbesondere ist vorgesehen, dass die Integrationskomponente von der Aktuatoreinrichtung getrennt bereitgestellt ist und die Ansteuerroutine umfasst, dass die Integrationskomponente die Steuerdaten über ein Datennetzwerk des Kraftfahrzeugs an die Aktuator Einrichtung aussendet. Das Datennetzwerk kann beispielsweise auf der Grundlage eines Ethernet-Netzwerks und/oder eines Datenbussystems, beispielsweise eines CAN-Bus (Controller Area Network), gebildet sein. Es muss also nicht jeder Aktuator seine eigene Integrationskomponente bereitstellen, um um Steuerdaten im Kraftfahrzeug an diesen Aktuator übertragen zu können.

Bisher wurde die Übertragung von Steuerdaten aus der Rechenebene in die Aktuator Ebene beschrieben. Andersherum kann es auch ermöglicht sein, aus einer Sensorebene Sensordaten für die Fahrzeugfunktionen bereitzustellen. Die besagte Aktuatorebene kann also auch eine kombinierte Sensor-Aktuator-Ebene sein, die zusätzlich zumindest eine Sensoreinheit aufweist. Als Sensoreinheit kann beispielsweise jeweils eine der folgenden vorgesehen sein:: ein Temperatursensor, ein Drehzahlsensor, ein Stromsensor für elektrischen Strom, ein Füllstandssensor, eine Kamera, um nur einige Beispiele zu nennen.

In dem Kraftfahrzeug sind die Fahrzeugfunktionen mit der Sensoreinrichtung über eine Integrationskomponente gekoppelt. Die Integrationskomponente vermittelt zwischen den Fahrzeugfunktionen einerseits und zumindest einer Sensoreinheit der Sensoreinrichtung andererseits. Sie ist also eine Vermittlungskomponente und integriert die Sensorik in das Rechenebene. Die Integrationskomponente beschafft hierzu die besagten Sensordaten aus einer Sensoreinheit oder aus mehreren Sensoreinheiten der Sensoreinrichtung unabhängig von den Fahrzeugfunktionen. Mit anderen Worten ist es aus Sicht der Integrationskomponente zunächst einmal egal, für welche der Fahrzeugfunktionen die Sensordaten beschafft werden. Mit anderen Worten beschafft die Integrationskomponente die Sensordaten ohne eine Aufforderung durch eine der Fahrzeugfunktionen. Die Integrationskomponente beschafft die Sensordaten mittels einer jeweiligen sensorspezifischen Erfassungsroutine. Mit anderen Worten ist die Integrationskomponente an die jeweilige Sensoreinheit angepasst, um die Sensordaten empfangen oder auslesen zu können. Die Integrationskomponente wandelt dann die Sensordaten zu jeweiligen Umgebungsdaten oder allgemein Zustandsdaten um. Hierzu können die Sensordaten zum Beispiel umgerechnet oder kombiniert werden. Allgemein erzeugt die Integrationskomponente Zustandsdaten aus den jeweiligen Sensordaten, d.h. die Zustandsdaten können mit den ihnen zugrunde liegenden Sensordaten auch identisch sein oder diese enthalten.

Jede der Fahrzeugfunktionen muss sich somit nicht mit dem Beschaffen der Sensordaten aus der Sensoreinheit oder den Sensoreinheiten der Sensoreinrichtung auskennen oder befassen. Stattdessen ruft jede der Fahrzeugfunktionen jeweils zumindest einige der bereitgestellten Zustandsdaten mittels einer sensorunabhängigen Abrufroutine aus der Integrationskomponente ab. Jede Fahrzeugfunktion kann also eine Abrufroutine nutzen, die nicht an die Sensoreinheit oder die Sensoreinheiten der Sensoreinrichtung angepasst sein muss. Damit ist die Fahrzeugfunktion hardwareunabhängig. Somit ergibt sich für die Fahrzeugfunktionen ein einheitliches Protokoll. Das Austauschen einer Sensoreinheit erfordert es somit nicht, dass auch die Fahrzeugfunktion angepasst wird. Jede der Fahrzeugfunktionen muss sich somit nicht mit dem Interpretieren von sensorspezifischen Sensordaten auskennen oder befassen. Stattdessen ruft jede der Fahrzeugfunktionen eine Abrufroutine der Integrationskomponente auf und nimmt die Umgebungsdaten entgegen, die die gemessene Größe in einem Format angeben, das von einem sensorspezifischen (z.B. herstellerbedingten) Format der Sensordaten verschieden sein kann. Die sensorspezifische Erfassungsroutine können dagegen Steuerbefehle und/oder Protokolle enthalten, die nur von dem Sensor interpretiert oder erzeugt werden. Z.B. kann die Erfassungsroutine aus einem Sensor eine sensorspezifische Angabe, z.B. "12 Ticks links" für einen Lenkwinkel, empfangen und daraus sensorunabhängig interpretierbare Umgebungsdaten, z.B. "5° links", erzeugen. Die Umrechnung erfolgt dann in der Integrationskomponente. Zudem stehen die Zustandsdaten für mehrere Fahrzeugfunktionen bereit, sodass nicht jede Fahrzeugfunktion selbst die von ihr benötigten Sensordaten aus derselben Sensoreinheit beschaffen muss. Bevorzugt ist eine einzige Integrationskomponente vorgesehen, von welcher alle Fahrzeugfunktionen die Zustandsdaten abrufen können.

Hierdurch ergibt sich der Vorteil, dass eine Fahrzeugfunktion einerseits und eine Sensoreinheit andererseits ausgetauscht werden können, ohne dass der jeweils andere Teil eine Anpassung erfordert. Die Integrationskomponente vermittelt zwischen Fahrzeugfunktionen einerseits und der zumindest einen Sensoreinheit der Sensoreinrichtung andererseits. Zudem können die Fahrzeugfunktionen unabhängig von der im Kraftfahrzeug genutzten Sensoreinheiten entwickelt werden und in Kraftfahrzeugen, die unterschiedlichen Sensoreinheiten aufweisen, verwendet werden.

Bevorzugt stellt die Integrationskomponente die Zustandsdaten an einer Abrufschnittstelle bereit, die für alle durch die Recheneinrichtung ausgeführten Fahrzeugfunktionen zugänglich ist. Die bereitgestellten Zustandsdaten werden dann durch jede Fahrzeugfunktion jeweils mittels der beschriebenen Abrufroutine an dieser Abrufschnittstelle ausgewählt und abgerufen. Indem die Zustandsdaten an der Abrufschnittstelle für alle Fahrzeugfunktionen zugänglich sind, kann also eine Fahrzeugfunktion nachgerüstet werden und diese dann ebenfalls mittels einer Abrufroutine Zustandsdaten auswählen und abrufen. Somit kann eine neue Fahrzeugfunktion im Kraftfahrzeug nachgerüstet werden, ohne dass hierzu eine zusätzliche Sensoreinheit bereitgestellt werden muss.

Wie bereits beschrieben, wandelt die Integrationskomponente die Sensordaten in jeweilige Zustandsdaten um. Dies kann realisiert werden, indem eine Einheitenkonvertierung durchgeführt wird. So kann beispielsweise für einen Lenkwinkel zwischen Grad und einer Hersteller bedingten Angabe einer Sensoreinheit konvertiert werden. Zusätzlich oder alternativ dazu kann eine Skalierung durchgeführt werden. So kann ein Wertebereich der Sensordaten an einen von einer Fahrzeugfunktionen benötigten Wertebereich angepasst werden. Zusätzlich oder alternativ dazu können mehrere Sensorsignale die jeweils durch die Sensordaten repräsentiert sind, zu einem Umgebungssignal verknüpft werden, dessen Zustandsdaten dann von einer Fahrzeugfunktion abgerufen werden können. Hierdurch kann eine Vorverarbeitung durch die Integrationskomponente bereitgestellt werden. Das Umwandeln von Sensordaten in Zustandsdaten macht die Sensoreinheiten austauschbar, ohne dass die Interpretation der Zustandsdaten durch die Fahrzeugfunktionen notwendig ist.

Bisher war von zwei logischen Ebenen die Rede, nämlich der Rechnerebene oder Rechenebene einerseits und der Sensor-Aktuator-Ebene darunter. Es kann noch eine dritte Ebene darüber vorgesehen sein, nämlich eine fahrzeugexterne Offboard-Ebene. Um diese zu realisieren, ist die Recheneinrichtung bevorzugt mit einer Kommunikationseinrichtung gekoppelt. Die Kommunikationseinrichtung betreibt eine jeweilige Kommunikationsverbindung mit zumindest einem fahrzeugfremden Fremdgerät. Ein solches Fremdgerät kann ein fahrzeugexternes Gerät oder ein in dem Kraftfahrzeug befindliches mobiles Endgerät sein. Ein fahrzeugexternes Fremdgerät kann zum Beispiel ein Server des Internets sein oder ein anderes Kraftfahrzeug. Zum Übertragen der Daten kann beispielsweise in der Kommunikationseinrichtung ein Mobilfunkmodul (z.B. GSM, UMTS, LTE) und/oder ein WLAN-Modul (Wireless Local Area Network) oder ein Kommunikationsmodul für eine Car2X-Kommunikation oder eine Fahrzeug-zu-Fahrzeug-Kommunikation vorgesehen sein. Die Integrationskomponente kann die Sensorebene mit der Offboard-Ebene koppeln. Hierzu kann vorgesehen sein, dass die Integrationskomponente zumindest einige ihrer Zustandsdaten (gebildet aus den Sensordaten) an zumindest eine fahrzeugextern ausgeführte, ausgelagerte Fahrzeugfunktion über die besagte Kommunikationseinrichtung aussendet. Es kann also auch eine Fahrzeugfunktion "offboard" außerhalb des Kraftfahrzeugs durchgeführt werden. Bei einer solchen ausgelagerten Fahrzeugfunktion kann es sich beispielsweise jeweils um eine Navigationsassistenz (Routenführung) oder Spracherkennung handeln.

Auch die fahrzeugeigenen oder fahrzeuginternen Fahrzeugfunktionen können mit der Offboard-Ebene gekoppelt werden. Hierzu kann die Integrationskomponente über die Kommunikationseinrichtung Quellendaten wie Sensordaten empfangen. Aus den Quellendaten kann die Integrationskomponente weitere Zustandsdaten für die im Kraftfahrzeug betriebenen Fahrzeugfunktionen erzeugen. Beispielsweise können auf diese Weise Wetterdaten als weitere Zustandsdaten oder auch Medieninhalte (Musikstreaming, Videostreaming) oder Kartendaten bereitgestellt werden. Die Fahrzeugfunktionen können dann mittels zumindest einer Abrufroutine auch diese zusätzlichen Zustandsdaten abrufen, genauso wie Sensordaten abgerufen werden können. Es kann also einer Fahrzeugfunktion egal sein, ob die Zustandsdaten aus der Offboard-Ebene oder aus der Sensorebene stammen. Zusätzlich kann vorgesehen sein, dass auch das Steuern zumindest eines Aktuators der Aktuatorebene von der Offboard-Ebene aus erfolgt. Hierzu können also Kommandodaten von einer ausgelagerten Fahrzeugfunktion über die Kommunikationseinrichtung in das Kraftfahrzeug an die Integrationskomponente übertragen werden, welche daraus dann Steuerdaten für zumindest einen Aktuator der Aktuatoreinrichtung des Kraftfahrzeugs bildet. Es kann schließlich auch vorgesehen sein, dass eine im Kraftfahrzeug ausgeführte Fahrzeugfunktion Kommandodaten erzeugt, auf deren Grundlage dann durch die Integrationskomponente mittels der Kommunikationseinrichtung offboard an eine fahrzeugexterne Aktuatoreinrichtung als aktuatorspezifische Steuerdaten ausgesendet werden.

Bevorzugt ist aufgrund der Flexibilität beim Nachrüsten von Fahrzeugfunktionen vorgesehen, dass die Recheneinrichtung auf der Grundlage von Applikationsdaten (das heißt Programmdaten oder einem Programmmodul für eine weitere Fahrzeugfunktion) zumindest eine weitere Fahrzeugfunktion nachrüstet oder installiert und dann mit der Integrationskomponente koppelt. Somit kann also in dem Kraftfahrzeug eine Fahrzeugfunktion in der Recheneinrichtung nachgerüstet werden. Die Applikationsdaten können hierzu beispielsweise über die besagte Kommunikationseinrichtung empfangen werden.

Bisher wurde die Sensoreinrichtung als passive, lediglich die Sensoreinheiten aufweisende Aktuatorebene oder Sensor-Aktuator-Ebene geschrieben, bei welcher alle Logik oder Verarbeitung in die Rechenebene verlagert ist. Dies ist aber nicht immer vorteilhaft. Bevorzugt ist deshalb vorgesehen, dass zumindest ein Aktuator der Aktuatoreinrichtung eine jeweilige Schutzfunktion betreibt und die jeweilige Eigenschutzfunktion selbstständig, unabhängig von der Integrationskomponente in Abhängigkeit von eigenen Betriebsdaten Steuerdaten erzeugt. Somit kann der Aktuator ohne Rückkopplung mit der Integrationseinrichtung, d.h. ohne die hierzu benötigte Verarbeitungsdauer, auf einen kritischen Zustand, beispielsweise eine Überhitzung und/oder Überlastung, reagieren. Bevorzugt ist auch vorgesehen, dass zumindest eine Sensoreinheit der Sensoreinrichtung eine jeweilige Eigenschutzfunktion betreibt und die jeweilige Eigenschutzfunktion selbstständig, unabhängig von der Integrationskomponente in Abhängigkeit von den Sensordaten der Sensoreinheit Steuerdaten erzeugt. So kann also auch innerhalb der Sensoreinrichtung beispielsweise ein Aktuator gesteuert werden oder eine Sensoreinheit abgeschaltet werden. Die Sensoreinrichtung ist somit nicht vollständig passiv. Beispielsweise kann eine Selbstabschaltung einer Sensoreinheit erfolgen, wenn diese außerhalb eines zulässigen Betriebsbereichs betrieben wird, beispielsweise überhitzt ist.

Das beschriebene indirekte Übertragen der Kommandodaten über die Integrationskomponente zu dem zumindest einen Aktuator hin kann zu einer Verzögerung führen oder zu einer Beschränkung der Datenrate. Um dies nicht für einen Aktuator, der eine vorgegebenen Mindestdatenrate für Steuerdaten benötigt, hinnehmen zu müssen, kann vorgesehen sein, dass zumindest eine Fahrzeugfunktion über eine Direktverbindung unter Umgehung der Integrationskomponente mit zumindest einem Aktuator der Aktuatoreinrichtung gekoppelt ist und an den Aktuator Steuerdaten mit einer Datenrate aussendet, die größer als eine von der Integrationskomponente für die Kommandodaten der Fahrzeugfunktion bereitgestellte Datenrate ist.

Um in einem Kraftfahrzeug das erfindungsgemäße Verfahren durchzuführen, ist die beschriebene Rechenebene nötig. Um diese bereitzustellen, ist durch die Erfindung auch eine Recheneinrichtung für ein Kraftfahrzeug bereitgestellt, wobei die Recheneinrichtung zumindest einen Prozessor (Mikroprozessor oder Mikrocontroller) zum Ausführen von Fahrzeugfunktionen aufweist. Die Recheneinrichtung weist erfindungsgemäß auch die beschriebene Integrationskomponente auf, die dazu eingerichtet ist, die Fahrzeugfunktionen mit einer Aktuatoreinrichtung des Kraftfahrzeugs zu koppeln und von den Fahrzeugfunktionen jeweils Kommandodaten mittels einer jeweiligen aktuatorunabhängigen Aufrufroutine zu empfangen und die Kommandodaten in jeweilige aktuatorspezifische Steuerdaten umzuwandeln und die Steuerdaten mittels einer aktuatorspezifischen Ansteuerroutine an einen jeweiligen Aktuator einer Aktuatoreinrichtung des Kraftfahrzeugs zu übertragen.

Das ebenfalls zur Erfindung gehörige Kraftfahrzeug weist die Aktuatoreinrichtung mit dem zumindest einen Aktuator auf sowie eine Ausführungsform der erfindungsgemäßen Recheneinrichtung, wobei die Aktuatoreinrichtung mit einer Integrationskomponente der Recheneinrichtung gekoppelt ist.

Bevorzugt ist vorgesehen, dass das Kraftfahrzeug auch eine Sensoreinrichtung mit zumindest eine Sensoreinheit aufweist und diese Sensoreinrichtung ebenfalls mit der Integrationskomponente der Recheneinrichtung gekoppelt ist.

Zu der Erfindung gehören auch Weiterbildungen der erfindungsgemäßen Recheneinrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Recheneinrichtung und des erfindungsgemäßen Kraftfahrzeugs hier nicht noch einmal beschrieben.

Im Folgenden sind Ausführungsbeispiele der Erfindung beschrieben. Hierzu zeigt die einzige Figur (Fig.) eine schematische Darstellung einer Ausführungsform des erfindungsgemäßen Kraftfahrzeugs zusammen mit einer Offboard-Ebene.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebenen Ausführungsformen auch durch weitere der bereits beschriebenen Merkmale der Erfindung ergänzbar.

Die Figur zeigt schematisiert ein Kraftfahrzeug 10, bei dem es sich um einen Kraftwagen, insbesondere einen Personenkraftwagen oder Lastkraftwagen handeln kann. Zusätzlich ist eine fahrzeugfremde Offboard-Ebene 11 (OFFBOARD) dargestellt, die beispielsweise ein mobiles Endgerät 12 und/oder einen Internet-Server 13 und/oder Fremdfahrzeuge 14 umfassen kann. Diese repräsentieren jeweils ein fahrzeugfremdes Fremdgerät. Der fahrzeugeigene oder zum Kraftfahrzeug 10 gehörige Bereich ist hier als Onboard-Bereich ONBOARD bezeichnet.

In dem Kraftfahrzeug 10 kann dessen elektronische Architektur 15 in zwei Ebenen eingeteilt sein, nämlich eine Rechenebene 16 und eine Sensor/Aktuator-Ebene 17. Die Rechenebene 16 kann durch eine Recheneinrichtung 18 gebildet sein, die einen oder mehrere Prozessoren 19 umfassen kann. Auf der Sensor/Aktuator-Ebene 17 kann eine Sensoreinrichtung 20 und eine Aktuatoreinrichtung 21 bereitgestellt sein. Die Sendeeinrichtung 21 kann Sensoreinheiten 22 umfassen, beispielsweise einen Lenkwinkelsensor und/oder eine Sensorik einer Hochvoltbatterie und/oder einen Radar. Die Aktuatoreinrichtung 21 kann einen oder mehrere Aktuatoren 23 aufweisen, beispielsweise eine elektrisch verfahrbare oder bewegbare Tür und/oder einen Heckklappenmotor und/oder einen Fensterheber. Allgemein stellt die Sensor-Aktuator-Ebene 17 spezifische, Sensor/Aktuator-gebundene Funktionen bereit, wie beispielsweise eine elektronische Stabilitätskontrolle (ESC), eine Fensterhebersteuerung, eine Motorsteuerung für einen Antriebsmotor des Kraftfahrzeugs 10.

Die Sensor/Aktuator-Ebene 17 kann mit der Rechenebene 16 über ein Datennetzwerk 24 verbunden sein. Somit können Sensordaten 25 aus der Sensoreinrichtung 20 zur Recheneinrichtung 18 übertragen werden. Aus der Recheneinrichtung 18 können Steuerdaten 26 an die Aktuator Einrichtung 21 übertragen werden.

Die Recheneinrichtung 18 kann zum Betreiben zumindest einer Funktionskomponente 27 vorgesehen sein. Eine Funktionskomponente 27 kann beispielsweise ein Programmmodul oder eine Softwarekomponente sein. Durch Betreiben einer Funktionskomponente 27 wird jeweils zumindest eine Fahrzeugfunktion 28 durch die jeweilige Funktionskomponente 27 ausgeführt. Beispiele für solche Fahrzeugfunktionen sind automatisiertes Fahren, dass Bereitstellen eines Umfeldmodells zum Modellieren einer Umgebung des Kraftfahrzeugs 10 und/oder einer Innenraum-Szenerie des Kraftfahrzeugs 10 und ein Thermometermanagement. Allgemein stellen die Fahrzeugfunktionen 28 übergreifende, rechen- und/oder datenintensive Fahrzeugfunktionen dar, die keine direkte Realisierung an der Sensoreinrichtung 20 und/oder der Aktuatoreinrichtung 21 erfordert.

Die Funktionskomponenten 27 müssen dabei die Sensordaten 25 nicht direkt verarbeiten können müssen. Genauso müssen die Funktionskomponenten 27 nicht dazu ausgelegt sein, die Steuerdaten 26 zu erzeugen. Vielmehr sind die Sensor/Aktuator-Ebene 17 und die Rechenebene 16 über eine Integrationskomponente 29 gekoppelt, welche die Sensordaten 25 in Zustandsdaten 30 umwandeln kann. Die Steuerdaten 26 können durch die Integrationskomponente 29 aus Kommandodaten 31 erzeugt werden, die durch die Fahrzeugfunktionen 28 erzeugt werden können.

Die Fahrzeugfunktionen 28 müssen daher nur mit der Integrationskomponente 29 kommunizieren. Hierzu können Sie über eine jeweilige Abrufroutine 32 die Zustandsdaten 30 von einer Abrufschnittstelle der Integrationskomponente 29 abrufen. Die Kommandodaten 31 können die Fahrzeugfunktionen 28 an einer Aufrufschnittstelle 34 mittels einer jeweiligen Aufrufroutine 35 bei der Integrationskomponente 29 abgeben.

Die Integrationskomponente 29 kann die Sensordaten 25 mittels einer Erfassungsroutine 36 aus dem Datennetzwerk 24 empfangen. Beispielsweise kann die Erfassungsroutine 36 das Auslesen eines CAN-Busses vorsehen. Mittels einer Ansteuerroutine 37 kann die Integrationskomponente 29 die Steuerdaten 26 über das Datennetzwerk 24 bei den Aktuatoren 23 abgeben.

In Bezug auf die Offboard-Ebene 11 ist vorgesehen, dass deren Komponenten 12, 13, 14 als Datenlieferanten für Quellendaten 40 vorgesehen sein können. Diese können über eine Kommunikationseinrichtung 41 des Kraftfahrzeugs 10 über jeweilige Kommunikationsverbindungen 42 aus beispielsweise dem Endgerät 12 und/oder dem Server 13 und/oder einem Fremdfahrzeug 14 empfangen werden. Des Weiteren kann beispielsweise auf dem Server 13 ebenfalls eine ausgelagerte Funktionskomponente 27' betrieben werden, durch welche ausgelagerte Fahrzeugfunktionen 28' ausgeführt werden können. Diese können dann ebenfalls in dem Kraftfahrzeug 10 genutzt werden, beispielsweise für eine Routenplanung, Navigation und/oder als Quellendaten 40 können Ampelinformationen oder Kartendaten bereitgestellt werden. Des Weiteren können über die Kommunikationsverbindungen 32 auch Zustandsdaten 30 in der Offboard-Ebene 11 bereitgestellt werden.

Die Prozessoren 19, die Kommunikationseinrichtung 41 und das Datennetzwerk 24 können über eine Datenautobahn 23 verknüpft sein, d.h. ein Datenbussystem und/oder Datennetzwerksystem, wie beispielsweise ein PCI-Bus (PCI - Peripheral Component Interconnect).

Durch die Trennung der Fahrzeugfunktionen 28 von der Sensor/Aktuator-Ebene 17 und die Verwendung von sensorunabhängigen Abrufroutinen 32 sowie aktuatorunabhängigen Aufrufroutinen 35 kann eine Fahrzeugfunktion unabhängig von der Bauweise der Sensoreinheiten 22 und Aktuatoren 23 entwickelt werden. Die zugehörige Funktionskomponente 27, d.h. der Programmcode, kann in der Recheneinrichtung 28 flexibel nachgeladen werden, die Abstraktionen der Sensor/Aktuator-Ebene 17 von der Rechenebene 16 ist durch die Integrationskomponente 29 ermöglicht, die eine hardwareunabhängige Entwicklung der Funktionskomponenten 27 ermöglicht.

Die drei Ebenen 11, 16, 17 sind durch die durchgängigen Kommunikations- und Protokollmechanismen, basierend auf den Abrufroutinen und den Aufrufroutinen, durchgehend einheitlich verknüpft oder ausgestaltet.

Somit ergibt sich ein funktionsfähiges Gesamtkonzept zum Ausführen von hardwareunabhängigen Fahrzeugfunktionen 28, 28'.

Es können einheitliche Richtlinien zur Gliederung einzelner Fahrzeugfunktionen 28, 28' in Teilfunktionen vorgenommen werden, wobei die Zuordnung jeder Teilfunktion in eine der Ebenen 11, 16, 17 erfolgen kann. Hierdurch ergibt sich ein wesentlich besseres Systemverständnis und eine bessere Überschaubarkeit. Es ist ein einfaches Nachladen von Funktionskomponenten 27 und damit von Funktionalitäten in dem Kraftfahrzeug 10 ermöglicht. Bei einem auftretenden Fehler kann dieser systematisiert gesucht werden.

Bevorzugt erfolgt die folgende Aufteilung von den beschriebenen Teilfunktionen in der Architektur.

Für eine hardwarenahe Regelung und Datenverarbeitung ist die Sensor/Aktuator-Ebene 17 vorgesehen. Es können mechatronisch abhängige Funktionen wie das Ansteuern von Hardware, das Lesen/Bereitstellen von Sensorwerten und/oder ein Eigenschutz, wie eine Temperaturüberwachung und/oder das Unterbrechen eines elektrischen Stromes. Es kann auch eine aktuatornahe Regelung vorgesehen sein, wie die besagte ESC-Regelung. In der Sensor/Aktuator-Ebene 17 sind aber keine darüber hinausgehenden Funktionen, wie beispielsweise eine Geschwindigkeitsregelung für den Antriebsmotor enthalten. Somit ergibt sich zwar ein durch den Eigenschutz bereitgestelltes Smart-Sensor- und Smart-Aktor-Konzept. Indem aber die Sensoreinheiten 22 und die Aktuatoren 23 nicht mit den Fahrzeugfunktionen 28 direkt interagieren, können standardisierte Komponenten verwendet werden, die dann über die Integrationskomponente 29 für die Fahrzeugfunktionen 28 verfügbar gemacht werden.

Durch die Integrationskomponente 29 ergibt sich eine Domänenverwaltung, in dem die Sensoreinrichtung 20 und die Aktuatoreinrichtung 21 über die Integrationskomponente 29 für die Funktionskomponenten 27 verfügbar gemacht werden. Es ergibt sich also eine Eingabe/Ausgabe-Vorverarbeitung für die eigentlichen Fahrzeugfunktionen. Es können auch domänenspezifische Funktionen vorgesehen sein, wie das Lademanagement, einen schlüssellosen Zugang und Motorstart und/oder eine Lenkungsregelung. Allgemein ist in der Rechenebene 16 eine mechatronisch unabhängige Funktionalität umsetzbar.

Die Funktionskomponenten 27 können durch die Prozessoren 29 der Recheneinrichtung 18 mit hochperformanter Rechenleistung ausgeführt werden. Es steht somit leistungsfähige Hardware und Betriebssystem-Software zur Verfügung, um Fahrzeugfunktionen 28 auszuführen. Auch fahrzeugübergreifende rechen- und datenintensive Fahrzeugfunktionen, wie das autonome Fahren, dass Bereitstellen eines Umgebungsmodells und/oder das maschinelle Lernen können hier umgesetzt sein. Es ist keine Anpassung an eine Hardware-spezifische Eingabe/Ausgabe nötig.

Durch die Recheneinrichtung 18 ist also generisch Rechenleistung bereitgestellt, mittels welcher beliebige Fahrzeugfunktionen, die mechatronisch unabhängig sind, ausgeführt werden können.

Durch die Offboard-Ebene 11 können rechen- und datenintensive Fahrzeugfunktionen, wie die Schwarmdaten-Analyse zum Auswerten von Zustandsdaten mehrerer Kraftfahrzeuge ausgeführt werden. Es lassen sich auch für ein spezifisches Fahrzeug vorgesehene ausgelagerte Fahrzeugfunktionen 28' ausführen, wie die Navigation oder Spracherkennung. Es können auch Datenquellen für die Fahrzeugfunktionen 28, wie beispielsweise das Musikstreaming und/oder die Objekterkennung umliegender Objekte und/oder das Empfangen von Warnungen von anderen Kraftfahrzeugen und/oder Kartendaten an das Kraftfahrzeug 10 über die Kommunikationsverbindungen 42 angebunden werden.

Insgesamt zeigen die Beispiele, wie durch die Erfindung für ein Kraftfahrzeug ein Automotive-3-Ebenen-Architekturkonzept bereitgestellt werden kann.

## Patentansprüche

1. Verfahren zum Bereitstellen von Fahrzeugfunktionen (28) in einem Kraftfahrzeug (10), wobei in einer Recheneinrichtung (18) des Kraftfahrzeugs (10) mehrere Fahrzeugfunktionen (28) ausgeführt werden und jede der ausgeführten Fahrzeugfunktionen (28) Kommandodaten (31) für zumindest einen jeweiligen Aktuator (23) einer Aktuatoreinrichtung (21) des Kraftfahrzeugs (10) erzeugt, wobei
die Fahrzeugfunktionen (28) und die Aktuatoreinrichtung (21) über eine Integrationskomponente (29) gekoppelt sind und die Fahrzeugfunktionen (28) jeweils die Kommandodaten (31) mittels einer jeweiligen aktuatorunabhängigen Aufrufroutine (35) an die Integrationskomponente (29) ausgeben,
**dadurch gekennzeichnet, dass**
jede der Fahrzeugfunktionen (28) sich nicht mit dem Erzeugen von aktuatorspezifischen Steuerdaten (26) der Aktuatoreinrichtung (21) auskennt, sondern stattdessen die jeweilige Aufrufroutine (35) der Integrationskomponente (29) aufruft und dieser die Kommandodaten (31) übergibt, die angeben, was der jeweilige Aktuator (23) tun soll, wobei es ein einheitliches Protokoll für die Aufrufroutine (35) gibt, sodass die Fahrzeugfunktion (28) hardwareunabhängig ist und das Austauschen eines Aktuators (23) es somit nicht erfordert, dass auch die Fahrzeugfunktion (28) angepasst wird, und
die Integrationskomponente (29) die Kommandodaten (31) in die jeweiligen aktuatorspezifischen Steuerdaten (26) umwandelt und die Steuerdaten (26) mittels einer aktuatorspezifischen Ansteuerroutine (37) an den jeweiligen Aktuator (23) überträgt.

2. Verfahren nach Anspruch 1, wobei die Integrationskomponente (29) die Kommandodaten (31) an einer für alle Fahrzeugfunktionen (28) zugänglichen Aufrufschnittstelle (34) entgegennimmt.

3. Verfahren nach einem der vorhergehenden Ansprüche, wobei die Integrationskomponente (29) die Kommandodaten (31) in die jeweiligen Steuerdaten (26) umwandelt, indem eine Einheitenkonvertierung und/oder Skalierung durchgeführt wird.

4. Verfahren nach einem der vorhergehenden Ansprüche, wobei jede Aufrufroutine (35) unabhängig von einem Hersteller und/oder Baumodell jedes Aktuators (23) ist.

5. Verfahren nach einem der vorhergehenden Ansprüche, wobei die Fahrzeugfunktionen (28) einerseits und jeder Aktuator (23) andererseits unabhängig voneinander austauschbar sind.

6. Verfahren nach einem der vorhergehenden Ansprüche, wobei die Integrationskomponente (29) von der Aktuatoreinrichtung (21) getrennt bereitgestellt ist und die Ansteuerroutine (37) umfasst, dass die Integrationskomponente (29) die Steuerdaten (26) über ein Datennetzwerk (24) des Kraftfahrzeugs (10) an die Aktuatoreinrichtung (21) aussendet.

7. Verfahren nach einem der vorhergehenden Ansprüche, wobei die Fahrzeugfunktionen (28) ihre jeweiligen Kommandodaten (31) auf der Grundlage von Sensordaten (25) einer Sensoreinrichtung (20) des Kraftfahrzeugs (10) erzeugt und die Fahrzeugfunktion (28) mit der Sensoreinrichtung (20) über die Integrationskomponente (29) gekoppelt ist und die Integrationskomponente (29) die Sensordaten (25) aus einer Sensorheit (22) oder mehreren Sensoreinheiten (22) der Sensoreinrichtung (20) unabhängig von den Fahrzeugfunktionen (28) mittels einer jeweiligen sensorspezifischen Erfassungsroutine (36) beschafft und zu jeweiligen Zustandsdaten (30) umwandelt und die Fahrzeugfunktionen (28) jeweils zumindest einige der bereitstellten Zustandsdaten (30) mittels einer sensorunabhängigen (32) Abrufroutine aus der Integrationskomponente (29) abrufen.

8. Verfahren nach Anspruch 7, wobei die Integrationskomponente (29) die Sensordaten (25) in die jeweiligen Zustandsdaten (30) umwandelt, indem eine Einheitenkonvertierung und/oder Skalierung und/oder eine Verknüpfung mehrerer der Sensordaten (25) zu den Umgebungsdaten (30) durchgeführt wird.

9. Verfahren nach Anspruch 7 oder 8, wobei die Integrationskomponente (29) mit einer Kommunikationseinrichtung (41) gekoppelt ist und die Kommunikationseinrichtung (41) ein jeweilige Kommunikationsverbindung (42) mit zumindest einem fahrzeugfremden Fremdgerät (12, 13, 14) betreibt und die Integrationskomponente (29) zumindest einige ihrer Zustandsdaten (30) an zumindest eine fahrzeugextern betriebenen weitere Fahrzeugfunktion (28') über die Kommunikationseinrichtung (41) aussendet und/oder über die Kommunikationseinrichtung (41) Quellendaten (40) empfängt und zu weiteren Zustandsdaten (30) für die im Kraftfahrzeug (10) betriebenen Fahrzeugfunktionen (28) umwandelt.

10. Verfahren nach einem der vorhergehenden Ansprüche, wobei die Recheneinrichtung (18) auf der Grundlage von Applikationsdaten zumindest eine weitere Fahrzeugfunktion nachrüstet und mit der Integrationskomponente (29) koppelt.

11. Verfahren nach einem der vorhergehenden Ansprüche, wobei zumindest ein Aktuator (23) der Aktuatoreinrichtung (21) eine jeweilige Eigenschutzfunktion betreibt und die jeweilige Eigenschutzfunktion selbständig, unabhängig von der Integrationskomponente (29) in Abhängigkeit von eigenen Betriebsdaten Steuerdaten erzeugt.

12. Verfahren nach einem der vorhergehenden Ansprüche, wobei zumindest eine der Fahrzeugfunktionen (28) über eine Direktverbindung unter Umgehung der Integrationskomponente (29) mit zumindest einem Aktuator (23) der Aktuatoreinrichtung (21) gekoppelt ist und an den Aktuator (23) Steuerdaten (26) mit einer Datenrate aussendet, die größer als eine von der Integrationskomponente (29) für die Kommandodaten (31) der Fahrzeugfunktion (28) bereitgestellte Datenrate ist.

13. Recheneinrichtung (18) für ein Kraftfahrzeug (10), wobei die Recheneinrichtung (18) zumindest einen Prozessor (19) zum Ausführen von Fahrzeugfunktionen aufweist, wobei die Recheneinrichtung (18) eine Integrationskomponente (29) aufweist, die dazu eingerichtet ist, von den Fahrzeugfunktionen jeweils Kommandodaten (31) mittels einer jeweiligen aktuatorunabhängigen Aufrufroutine (35) zu empfangen und die Kommandodaten (31) in jeweilige aktuatorspezifische Steuerdaten (26) umzuwandeln und die Steuerdaten (26) mittels einer aktuatorspezifischen Ansteuerroutine (37) an einen jeweiligen Aktuator (23) einer Aktuatoreinrichtung (21) des Kraftfahrzeugs (10) zu übertragen,
**dadurch gekennzeichnet, dass**
jede der Fahrzeugfunktionen (28) sich nicht mit dem Erzeugen von aktuatorspezifischen Steuerdaten (26) der Aktuatoreinrichtung (21) auskennt, sondern stattdessen dazu eingerichtet ist, die jeweilige Aufrufroutine (35) der Integrationskomponente (29) aufzurufen und dieser die Kommandodaten (31) zu übergeben, die angeben, was der jeweilige Aktuator (23) tun soll, wobei es ein einheitliches Protokoll für die Aufrufroutine (35) gibt, sodass die Fahrzeugfunktion (28) hardwareunabhängig ist und das Austauschen eines Aktuators (23) es somit nicht erfordert, dass auch die Fahrzeugfunktion (28) angepasst wird.

14. Kraftfahrzeug (10) mit Aktuatoreinrichtung (21), die zumindest einen mittels Steuerdaten (26) steuerbar ausgestalteten Aktuator (23) aufweist, **dadurch gekennzeichnet, dass** das Kraftfahrzeug (10) eine Recheneinrichtung (18) nach Anspruch 13 aufweist.

15. Kraftfahrzeug (10) nach Anspruch 14, wobei eine einer Sensoreinrichtung (20) zum Erzeugen von Sensordaten (25) bereitgestellt ist und die Sensoreinrichtung (20) mit einer Integrationskomponente (29) der Recheneinrichtung (18) gekoppelt ist.

## Claims

1. Method for providing vehicle functions (28) in a motor vehicle (10), wherein a plurality of vehicle functions (28) are executed in a computing device (18) of the motor vehicle (10) and each of the executed vehicle functions (28) generates command data (31) for at least one respective actuator (23) of an actuator device (21) of the motor vehicle (10), wherein the vehicle functions (28) and the actuator device (21) are coupled via an integration component (29) and the vehicle functions (28) respectively output the command data (31) to the integration component (29) by means of a respective actuator-independent call routine (35),
**characterised in that**
each of the vehicle functions (28) is unable to generate actuator specific control data (26) for the actuator device (21) but instead calls the respective call routine (35) of the integration component (29) and passes the command data (31) to this, which indicates what the respective actuator (23) should do wherein there is a uniform protocol for the call routine (35) such that the vehicle function (28) is hardware independent, and replacing an actuator (23) thus does not require the vehicle function (28) to be adjusted,
and the integration component (29) converts the command data (31) into the respective actuator-specific control data (26) and transmits the control data (26) to the respective actuator (23) by means of an actuator-specific drive routine (37).

2. Method according to claim 1, wherein the integration component (29) receives the command data (31) at a call interface (34) accessible to all vehicle functions (28).

3. Method according to any one of the preceding claims, wherein the integration component (29) converts the command data (31) into the respective control data (26) by performing unit conversion and/or scaling.

4. Method according to any one of the preceding claims, wherein each call routine (35) is independent of a manufacturer and/or building model of each actuator (23).

5. Method according to any one of the preceding claims, wherein the vehicle functions (28) on the one hand and each actuator (23) on the other hand are independently interchangeable.

6. Method according to any one of the preceding claims, wherein the integration component (29) is provided separately from the actuator device (21) and the drive routine (37) comprises the integration component (29) transmitting the control data (26) to the actuator device (21) via a data network (24) of the motor vehicle (10).

7. Method according to any one of the preceding claims, wherein the vehicle functions (28) generates their respective command data (31) based on sensor data (25) of a sensor device (20) of the motor vehicle (10) and the vehicle function (28) is coupled to the sensor device (20) via the integration component (29) and the integration component (29) obtains the sensor data (25) from a sensor unit (22) or a plurality of sensor units (22) of the sensor device (20) independently of the vehicle functions (28) by means of a respective sensor-specific detection routine (36) and converts these to respective status data (30) and the vehicle functions respectively retrieve at least some of the provided state data (30) from the integration component (29) by means of a sensor-independent (32) retrieval routine.

8. Method according to claim 7, wherein the integration component (29) converts the sensor data (25) to the respective state data (30) by unit conversion and/or scaling and/or linking a plurality of the sensor data (25) to the environmental data (30).

9. Method according to claim 7 or 8, wherein the integration component (29) is coupled to a communication device (41) and the communication device (41) operates a respective communication link (42) with at least one external device (12, 13, 14) outside the vehicle and the integration component (29) sends at least some of its state data (30) via the communication device (41) to least one further vehicle function (28') operated external to the vehicle and/or receives source data (40) via the communication device (41) and converts this to further state data (30) for the vehicle functions (28) operated in the motor vehicle (10).

10. Method according to any one of the preceding claims, wherein the computing device (18) retrofits at least one further vehicle function on the basis of application data and couples it to the integration component (29).

11. Method according to any one of the preceding claims, wherein at least one actuator (23) of the actuator device (21) operates a respective self-protection function and the respective self-protection function autonomously generates control data independently of the integration component (29) depending on its own operating data.

12. Method according to any one of the preceding claims, wherein at least one of the vehicle functions (28) is coupled to at least one actuator (23) of the actuator device (21) via a direct connection bypassing the integration component (29) and transmits control data (26) to the actuator (23) at a data rate which is greater than a data rate provided by the integration component (29) for the command data (31) of the vehicle function (28).

13. Computing device (18) for a motor vehicle (10), wherein the computing device (18) has at least one processor (19) for executing vehicle functions,
wherein the computing device (18) has an integration component (29) which is configured to receive command data (31) from the vehicle functions by means of a respective actuator-independent call routine (35) and to convert the command data (31) into respective actuator-specific control data (26) and to transmit the control data (26) by means of an actuator-specific drive routine (37) to a respective actuator (23) of an actuator device (21) of the motor vehicle (10),
**characterised in that**
each of the vehicle functions (28) is unable to generate actuator specific control data (26) for the actuator device (21) but instead is configured to call the respective call routine (35) of the integration component (29) and to pass the command data (31) to this, which indicates what the respective actuator (23) should do, wherein there is a uniform protocol for the call routine (35) such that the vehicle function (28) is hardware independent and the replacement of an actuator (23) thus does not require that the vehicle function (28) must also be adjusted.

14. Motor vehicle (10) with actuator device (21), which has at least one actuator (23) controllable by means of control data (26), **characterised in that** the motor vehicle (10) has a computing device (18) according to claim 13.

15. Motor vehicle (10) according to claim 14, wherein a sensor device (20) is provided for generating sensor data (25) and the sensor device (20) is coupled to an integration component (29) of the computing device (18).

## Revendications

1. Procédé de mise à disposition de fonctions de véhicule (28) dans un véhicule automobile (10), dans lequel, dans un ordinateur (18) du véhicule automobile (10), plusieurs fonctions de véhicule (28) sont réalisées et chacune des fonctions (28) réalisées produit des données d'instruction (31) pour au moins un actionneur (23) respectif d'un dispositif actionneur (21) du véhicule automobile (10), dans lequel
les fonctions de véhicule (28) et le dispositif actionneur (21) sont couplés par l'intermédiaire d'un composant d'intégration (29) et les fonctions de véhicule (28) délivrent à chaque fois les données d'instruction (31) au composant d'intégration (29) au moyen d'une routine d'appel (35) respective indépendante de l'actionneur,
**caractérisé en ce que**
chacune des fonctions de véhicule (28) ne sait pas comment produire des données de commande (26), spécifiques à l'actionneur, du dispositif actionneur (21) mais appelle à la place la routine d'appel (35) respective du composant d'intégration (29) et lui transmet les données d'instruction (31) qui indiquent ce que l'actionneur (23) respectif doit faire, sachant qu'il existe un protocole unique pour la routine d'appel (35) de telle sorte que la fonction de véhicule (28) est indépendante du matériel et le remplacement d'un actionneur (23) n'oblige donc pas à adapter aussi la fonction de véhicule (28), et
le composant d'intégration (29) transforme les données d'instruction (31) en les données de commande (26) respectives spécifiques à l'actionneur et transmet les données de commande (26) à l'actionneur (23) respectif au moyen d'une routine de commande (37) spécifique à l'actionneur.

2. Procédé selon la revendication 1, dans lequel le composant d'intégration (29) prend les données d'instruction (31) au niveau d'une interface d'appel (34) accessible à toutes les fonctions de véhicule (28).

3. Procédé selon l'une quelconque des revendications précédentes, dans lequel le composant d'intégration (29) transforme les données d'instruction (31) en les données de commande (26) respectives en effectuant une conversion d'unités et/ou un changement d'échelle.

4. Procédé selon l'une quelconque des revendications précédentes, dans lequel chaque routine d'appel (35) est indépendante d'un fabricant et/ou modèle de chaque actionneur (23).

5. Procédé selon l'une quelconque des revendications précédentes, dans lequel les fonctions de véhicule (28) d'une part et chaque actionneur (23) d'autre part peuvent être remplacés indépendamment les uns des autres.

6. Procédé selon l'une quelconque des revendications précédentes, dans lequel le composant d'intégration (29) est mis à disposition séparément du dispositif actionneur (21) et comprend la routine de commande (37) et le composant d'intégration (29) envoie les données de commande (26) via un réseau de données (24) du véhicule automobile (10) vers le dispositif actionneur (21).

7. Procédé selon l'une quelconque des revendications précédentes, dans lequel les fonctions de véhicule (28) produit leurs données d'instruction (31) respectives sur la base de données de capteur (25) d'un dispositif capteur (20) du véhicule automobile (10) et la fonction de véhicule (28) est couplée au dispositif capteur (20) via le composant d'intégration (29) et le composant d'intégration (29) fournit les données de capteur (25) à partir d'une unité de capteur (22) ou de plusieurs unités de capteurs (22) du dispositif capteur (20) indépendamment des fonctions de véhicule (28) au moyen d'une routine d'acquisition (36) respective spécifique au capteur et les transforme en données d'état (30) respectives et les fonctions de véhicule (28) appellent à chaque fois au moins certaines des données d'état (30) fournies au moyen d'une routine d'appel (32), indépendante du capteur, à partir du composant d'intégration (29).

8. Procédé selon la revendication 7, dans lequel le composant d'intégration (29) transforme les données de capteur (25) en les données d'état (30) respectives en effectuant une conversion d'unités et/ou un changement d'échelle et/ou une combinaison de plusieurs des données de capteur (25) en données d'environnement (30).

9. Procédé selon la revendication 7 ou 8, dans lequel le composant d'intégration (29) est couplé à un dispositif de communication (41) et le dispositif de communication (41) exploite une liaison de communication (42) respective avec au moins un appareil externe (12, 13, 14) externe au véhicule et le composant d'intégration (29) envoie au moins certaines de ses données d'état (30) vers au moins une autre fonction de véhicule (28'), exploitée de manière externe au véhicule, via le dispositif de communication (41) et/ou reçoit des données de source (40) via le dispositif de communication (41) et les transforme en autres données d'état (30) pour les fonctions de véhicule (28) exploitées dans le véhicule automobile (10).

10. Procédé selon l'une quelconque des revendications précédentes, dans lequel l'ordinateur (18) complète sur la base de données d'application au moins une autre fonction de véhicule et la couple au composant d'intégration (29).

11. Procédé selon l'une quelconque des revendications précédentes, dans lequel au moins un actionneur (23) du dispositif actionneur (21) exploite une fonction d'autoprotection respective et la fonction d'autoprotection respective produit automatiquement, indépendamment du composant d'intégration (29), des données de commande en fonction de ses propres données d'exploitation.

12. Procédé selon l'une quelconque des revendications précédentes, dans lequel au moins l'une des fonctions de véhicule (28) est couplée via une liaison directe, contournant le composant d'intégration (29), à au moins un actionneur (23) du dispositif actionneur (21) et envoie vers l'actionneur (23) des données de commande (26) avec un débit de données qui est supérieur à un débit de données fourni par le composant d'intégration (29) pour les données d'instruction (31) de la fonction de véhicule (28).

13. Ordinateur (18) pour un véhicule automobile (10), dans lequel l'ordinateur (18) inclut au moins un processeur (19) destiné à mettre en oeuvre des fonctions de véhicule,
dans lequel l'ordinateur (18) inclut un composant d'intégration (29) qui est conçu pour recevoir des fonctions de véhicule à chaque fois des données d'instruction (31) au moyen d'une routine d'appel (35) respective indépendante de l'actionneur et pour transformer les données d'instruction (31) en données de commande (26) respectives spécifiques à l'actionneur et pour transmettre les données de commande (26) à un actionneur (23) respectif d'un dispositif actionneur (21) du véhicule automobile (10) au moyen d'une routine de commande (37) spécifique à l'actionneur,
**caractérisé en ce que**
chacune des fonctions de véhicule (28) ne sait pas comment produire des données de commande (26), spécifiques à l'actionneur, du dispositif actionneur (21) mais est conçue à la place pour appeler la routine d'appel (35) respective du composant d'intégration (29) et pour lui transmettre les données d'instruction (31) qui indiquent ce que l'actionneur (23) respectif doit faire, dans lequel il existe un protocole unique pour la routine d'appel (35) de telle sorte que la fonction de véhicule (28) est indépendante du matériel et le remplacement d'un actionneur (23) n'oblige donc pas à adapter aussi la fonction de véhicule (28).

14. Véhicule automobile (10) avec dispositif actionneur (21), qui inclut au moins un actionneur (23) conçu de manière à pouvoir être commandé au moyen de données de commande (26), **caractérisé en ce que** le véhicule automobile (10) inclut un ordinateur (18) selon la revendication 13.

15. Véhicule automobile (10) selon la revendication 14, dans lequel un dispositif capteur (20) est mis à disposition pour produire des données de capteur (25) et le dispositif capteur (20) est couplé à un composant d'intégration (29) de l'ordinateur (18).
